# EUROPÄISCHE PATENTSCHRIFT

(11) **EP 0 401 628 B1**
(45) Veröffentlichungstag und Bekanntmachung des Hinweises auf die Patenterteilung: **16.03.1994**
(21) Anmeldenummer: 90110031.3
(22) Anmeldetag: 26.05.1990
(51) Int. Cl.: C08L 33/08, C08L 51/04, C08L 57/00, C08L 69/00

(54) **Polymerisatmischungen für flexible Folien**
Polymer mixtures for flexible foils
Mélanges de polymères pour feuilles flexibles

(30) Priorität: 06.06.1989 DE 3918405
(43) Veröffentlichungstag der Anmeldung: 12.12.1990
(73) Patentinhaber: BAYER AG, 51368 Leverkusen (DE)
(72) Erfinder: Piejko, Karl-Erwin, Dr., D-5060 Bergisch Gladbach 2 (DE); Meurer, Kurt Peter, Dr., D-5330 Königswinter 21 (DE); Braese, Hans-Eberhard, D-5000 Koeln 71 (DE)

(56) Entgegenhaltungen:
- EP-A- 0 183 167
- EP-A- 0 332 995
- FR-A- 2 330 710
- FR-A- 2 371 486

## Beschreibung

Die Erfindung betrifft Polymerisatmischungen aus einem speziellen Pfropfkautschuk auf Acrylatbasis, einem speziellen Acrylatcopolymer, bestimmten harzartigen Vinylpolymerisaten und bestimmten Carbonatgruppen enthaltenden Polyestern, die sich zur Herstellung von flexiblen alterungsbeständigen Folien mit lederartigem Aussehen eignen und die durch Kalandrieren und Tiefziehen verarbeitet werden können.

Kunststoff-Folien mit lederartigem Aussehen werden beispielsweise zur Innenverkleidung von Kraftfahrzeugen verwendet. Sie werden meist durch Kalandrieren einer Rohfolie und anschließendes Tiefziehen hergestellt. Als Kunststoff verwendet man meist Gemische von Polyvinylchlorid (PC) und verschiedenen Vinylpolymerisaten und Weichmachern. Diese Folien sind bei hohen Temperaturen nicht vollständig alterungsstabil, enthalten flüchtige, zur Migration neigende Stoffe sowie Halogen. Diese Nachteile sind überwiegend auf das Polyvinylchlorid zurückzuführen. Es besteht daher Bedarf an einem Kunststoffmaterial, das kein Polyvinylchlorid enthält und sich dennoch für die Herstellung lederartiger Folien eignet.

Es wurde eine Polymerisatmischung aus einem speziellen Pfropfkautschuk auf Acrylatbasis, einem speziellen Acrylatcopolymer, bestimmten harzartigen Vinylpolymerisaten und bestimmten Carbonatgruppen enthaltenden Polyestern gefunden, die sich hervorragend zur Herstellung von weichen Folien - auch mit Lederprägung - durch Tiefziehverarbeitung eignet.

Die erhaltenen Folien sind alterungsstabil, auch bei hohen Temperaturen. Zur technischen Verarbeitung sind nur wenig Hilfsstoffe (Stabilisatoren, Gleitmittel, Trennmittel etc.) in geringen Mengen erforderlich. Die Folien aus den erfindungsgemäßen Polymerisatmischungen haften besonders gut auf anderen technischen Polymeren, z.B. auf Polyurethan.

Gegenstand der Erfindung sind somit Polymerisatmischungen aus
a) 10 bis 60, insbesondere 20 bis 50 Gew.-Teilen eines Pfropfpolymerisates mit einem Kautschukgehalt von 30-80 Gew.-%, bevorzugt 40-65 Gew.-%, besonders bevorzugt 50-60 Gew.-% von
a.1) Gemischen aus 20 bis 40 Gew.-% Acrylnitril und 80 bis 60 Gew.-% Styrolen und/oder Alkylmethacrylaten oder
a.2) Methylmethacrylat, gegebenenfalls gemischt mit bis zu 30, bevorzugt 2 bis 20 Gew.-% Styrolen und/oder bis zu 30, bevorzugt 2 bis 20 Gew.-% Alkylacrylaten und/oder bis zu 19, bevorzugt 2 bis 15 Gew.-% Acrylnitril auf
a.3) einen teilchenförmigen hochvernetzten Alkylacrylatkautschuk, der bis zu 30, bevorzugt 0,5 bis 10 Gew.-% Diene einpolymerisiert enthalten kann, mit einem mittleren Teilchendurchmesser (d₅₀) von 80 bis 1.000 nm,
b) 10 bis 50, insbesondere 10 bis 40 Gew.-Teilen eines teilvernetzten kautschukartigen Copolymerisats aus 5 bis 40, bevorzugt 10 bis 35 Gew.-% Acrylnitril, Styrol, Alkylmethacrylat oder deren Mischungen und 95 bis 60, bevorzugt 90 bis 65 Gew.-% Alkylacrylat, mit einem Gelgehalt von 20 bis 99 Gew.-%, einem Quellungsindex größer 10, gemessen in Dimethylformamid bei 23°C, und einem mittleren Teilchendurchmesser (d₅₀) von 100 bis 600 nm, insbesondere von 100 bis 300 nm,
c) 5 bis 40, bevorzugt 10 bis 30 Gew.-Teilen eines unvernetzten Polymerisates von Styrolen, Acrylnitril, Methacrylnitril, Estern der (Meth)acrylsäure, Vinyl-C₁-C₄-Carbonsäuren oder Mischungen dieser Monomere mit Staudinger-Indices [η] (in Dimethylformamid bei 23°C gemessen) von 0,3 bis 1,5 dl/g und
d) 1 bis 40, insbesondere 5 bis 30 Gew.-Teilen eines Carbonatgruppen enthaltenden Polyesters mit wiederkehrenden Struktureinheiten der Formel 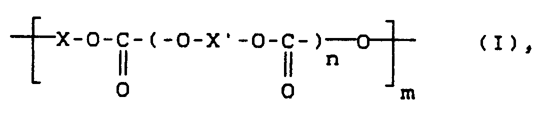 in der
   - X: der Rest eines Umsetzungsproduktes eines mehrwertigen Alkohols mit einer mehrwertigen aliphatischen Carbonsäure mit einem Molekulargewicht von 800 bis 5.000 ist,
   - X′ =: X oder den Rest eines aliphatischen Polyethers vom Molekulargewicht 800 bis 5.000 darstellt,
   - n =: 0 oder 1 bis 20 ist und
   - m: eine Zahl größer 20, bevorzugt 22 bis 100, bedeutet.

Pfropfpolymerisate a) im Sinne der Erfindung sind im allgemeinen Emulsionspolymerisate mit Teilchenstruktur. Sie bestehen aus teilchenförmigen Alkylacrylatkautschuken mit einem Gelgehalt von größer 50, bevorzugt 70 bis 99 Gew.-% und mittleren Teilchendurchmessern (d₅₀) von 80 bis 1.000 nm als Pfropfgrundlage und darauf pfropfpolymerisierten Monomeren, wie Alkyl(meth)acrylaten, Styrolen, wie Styrol, α-Methylstyrol, p-Methylstyrol, Acrylnitril oder deren Mischungen.

Die Alkylacrylatkautschuke (a.3) können durch vernetzende Copolymerisation von bevorzugt C₂-C₈-Alkylacrylaten und gegebenenfalls bis zu 20 Gew.-% Comonomeren, wie Styrol, Methylmethacrylat, Vinylmethylether und/oder Acrylnitril, sowie bis zu 4 Gew.-% polyfunktionellen Vinyl-und/oder Allylmonomeren, wie Divinylbenzol, Glykol-bis-acrylat, Bis-acrylamid, Phosphorsäuretriallylester, Zitronensäuretriallylester, Triallylcyanurat, Triallylisocyanurat, Allylester von Acrylsäure oder Methacrylsäure, Maleinsäureallylester, insbesondere Triallylcyanurat oder Triallylisocyanurat, hergestellt werden. Die bevorzugt als Pfropfgrundlagen eingesetzten Acrylatkautschuke besitzen eine bimodale Verteilung der mittleren Teilchendurchmesser. Es handelt sich also vorzugsweise um Gemische von zwei teilchenförmigen Kautschuken, wobei der eine einen mittleren Teilchendurchmesser (d₅₀) von 150 bis 250 nm und der andere einen mittleren Teilchendurchmesser (d₅₀) von 400 bis 600 nm besitzt. Das Gewichtsverhältnis des feinteiligen zum grobteiligen Kautschuk beträgt 1:2 bis 2:1. In der Verteilungskurve der mittleren Teilchendurchmesser einer Mischung der beiden Kautschuke, die den gleichen oder verschiedenen chemischen Aufbau haben können, befinden sich also zwei Maxima.

Besonders geeignete grobteilige Kautschuke weisen eine Kern-Mantel-Struktur auf (vgl. DE-OS 3 006 804).

Besonders bevorzugte Kautschuke a.3, d.h. Pfropfgrundlagen im Sinne der Erfindung zur Herstellung der Pfropfpolymeriste, a) sind somit Gemische von größeren Kautschukteilchen mit Kern/Mantel-Struktur und kleineren Kautschukteilchen ohne Kern/Mantel-Struktur. Die zur Pfropfpolymerisation eingesetzten Kautschuke sind vernetzt und besitzen Gelgehalte von 50 bis 99, bevorzugt 70 bis 99 Gew.-%. Zur Herstellung von Pfropfpolymerisate a) werden auf die in Emulsion vorliegenden Acrylatkautschuke unter Aufrechterhaltung der Emulsion die Vinylmonomere pfropfpolymerisiert. Bevorzugt werden als Vinylmonomere Styrol und Acrylnitril eingesetzt.

Die Vinylmonomere werden bevorzugt mit einer Pfropfausbeute größer 40 Gew.-%. aufpolymerisiert, d.h. ein großer Teil der Vinylmonomeren ist chemisch an den Kautschuk (über kovalente Bindungen) gebunden. Man erhält solch hohe Pfropfausbeuten, wenn man in an sich bekannter Weise mit Redox-Initiatoren arbeitet, bevorzugt mit Kombinationen aus Hydroperoxid und Ascorbinsäure, gegebenenfalls unter Zusatz von geeigneten Schwermetallkationen.

Der Copolymerisat b) im Sinne der Erfindung ist ein teilvernetztes kautschukartiges Copolymerisat aus Acrylnitril, Styrol, C₁-C₆-Alkylmethacrylat, insbesondere C₁-C₃-Alkylmethacrylat, oder deren Mischungen, bevorzugt aus Acrylnitril und/oder Methylmethacrylat und einem Alkylacrylat, insbesondere C₃-C₈-Alkylacrylat, sowie 0,05 bis 5 Gew.-%., bezogen auf die im Copolymerisat enthaltenen Monomeren, einer polyfunktionellen, copolymerisierbaren Polyvinyl- oder Allylverbindung, vorzugsweise Triallylcyanurat, Triallylisocyanurat, Vinylether von Polyolen, Vinyl- oder Allylester polyfunktioneller Carbonsäuren und Bisacrylamide von Diaminen. Die Copolymerisate b) besitzen Gelgehalte von 20 bis 99 Gew.-%, insbesondere 40 bis 99 Gew.-%, einen Quellungsindex größer 10, bevorzugt 10 bis 100, gemessen in Dimethylformamid bei 23°C und mittlere Teilchendurchmesser (d₅₀) von 100 bis 600 nm, insbesondere von 100 bis 300 nm.

Die Polymerisate b) können in bekannter Weise durch radikalische, wäßrige Emulsionspolymerisation in Gegenwart anionischer, oberflächenaktiver Stoffe im Temperaturbereich von 40 bis 95°C, insbesondere 55 bis 80°C, hergestellt werden.

Vinylpolymerisate c) im Sinne der Erfindung sind harzartige Polymerisate oder Copolymerisate aus Styrolen, wie Styrol, α-Methylstyrol, p-Methylstyrol, Acrylnitril, Methacrylnitril, Estern der (Meth)acrylsäure, Vinyl-C₁-C₄-Carbonsäuren oder Mischungen aus den genannten Monomeren mit Staudinger-Indices [η] als Maß für das Molekulargewicht (in Dimethylformamid bei 23°C gemessen) von 0,3 bis 1,5 dl/g. Bevorzugt sind Copolymerisats aus Styrol oder α-Methylstyrol mit Acrylnitril, die gegebenenfalls bis zu 40 Gew.-% Ester der Acrylsäure oder insbesondere Methylmethacrylat oder Butylacrylat, einpolymerisiert enthalten.

Die Vinylpolymerisate c) werden nach üblichen Verfahren, z.B. radikalischer Polymerisation in Masse, Lösung, Suspension oder Emulsion, bevorzugt durch radikalische Emulsionspolymerisation in Wasser, hergestellt.

Der Polyester d) im Sinne der Erfindung ist ein Carbonatgruppen enthaltender Polyester mit wiederkehrenden Struktureinheiten der Formel 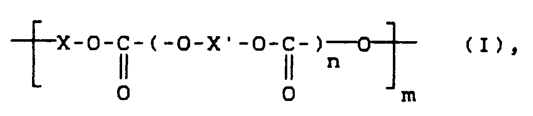
mit der zuvor genannten Bedeutung für X, X′, n und m.

Umsetzungsprodukte von mehrwertigen Alkoholen mit mehrwertigen aliphatischen Carbonsäuren sind bevorzugt solche von zweiwertigen und gegebenenfalls zusätzlichen dreiwertigen Alkoholen mit vorzugsweise zweiwertigen aliphatischen Carbonsäuren. (Ihre Reste entsprechen X in Formel I). Anstelle der freien Carbonsäuren können auch deren Anhydride oder Ester mit niedrigen Alkoholen oder deren Gemische verwendet werden. Die mehrwertigen Carbonsäuren sind bevorzugt acyclisch. Als Beispiele seien genannt Oxalsäure, Malonsäure, Bernsteinsäure, Adipinsäure, Korksäure, Azelainsäure, Sebacinsäure, Hexahydrophthalsäureanhydrid, Glutarsäureanhydrid, bevorzugt Adipinsäure.

Als mehrwertige Alkohole kommen, gegebenenfalls im Gemisch miteinander, z.B. Ethylenglykol, Propylenglykol(1,2) und -(1,3), Butylenglykol-(1,4) und -(2,3), Hexandiol-(1,6), Octandiol-(1,8), Neopentylglykol, Cyclohexandimethanol, 1,4-Bis-(hydroxymethylcyclohexan), 2-Methyl-1,3-propandiol, Diethylenglykol, Triethylenglykol, Tetraethylenglykol, Dipropylenglykol und Dibutylenglykol in Frage. Bevorzugt werden eingesetzt Hexandiol-(1,6) und Neopentylglykol.

Die aus den Carbonsäuren und Alkoholen erhaltenen Umsetzungsprodukte stellen Polyester mit endständigen Hydroxylgruppen dar. Sie haben Molekulargewichte von 800 bis 5.000; sie können durch die Formel HO-X-OH symbolisiert werden, wobei X die oben angegebene Bedeutung hat.

Die Carbonatgruppen enthaltenden Polyester entstehen aus den erwähnten Polyestern mit endständigen Hydroxylgruppen durch Umsetzung mit bifunktionellen Kohlensäurearylestern.

Bifunktionelle Kohlensäurearylester sind insbesondere die der Formel 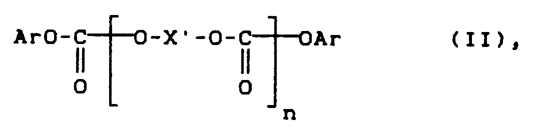
worin
- Ar: ein substituierter oder unsubstituierter Arylrest mit 6 bis 18 Kohlenstoffatomen, vorzugsweise mit 6 Kohlenstoffatomen, ist
- n =: 0 oder 1 bis 20 ist und
- X′: der bivalente Rest eines Polyesters oder Polyethers wie zuvor definiert.

Genannt seien als Ethergruppen-enthaltende Diole Diethylenglykol, Triethylenglykol, Tetraethylenglycol, Dipropylenglycol und Dibutylenglykol.

Die Carbonatgruppen enthaltenden Polyester wird bevorzugt durch Polykondensation in Hochviskos-Reaktoren, wie Knetern oder Schneckenmaschinen, hergestellt (vgl. das US-PS Nr. 4 192 940).

Die erfindungsgemäße Polymerisatmischung aus a) bis d) laßt sich beispielsweise wie folgt herstellen:
Fallen a), b) und c) als wäßrige Dispersion an, so können diese in der dem gewünschten Ergebnist entsprechenden Menge vermischt und gemeinsam, Pulver, aufgearbeitet werden. Das primär erhaltene Pulver kann gegebenenfalls zu einem Granulat, unter Zusatz konventioneller Hilfsstoffe, verdichtet werden.
d) wird mit bekannten Aggregaten, wie Schneckenmaschinen, Walzen, Knetern oder Pulvermischern, mit dem in a) bis b) und c) vermischt.
a) b) und c) können auch getrennt aufgearbeitet und dann mit Komponente d) vermischt werden.

Gelgehalte und Quellungsindices wurden, wenn nicht anders angegeben, in Dimethylformamid bei 23°C ermittelt (vgl. M. Hoffmann et al., Polymeranalytik II, Georg-Thieme-Verlag, Stuttgart, 1977). Die Teilchendurchmesser stellen mittlere Teilchendurchmesser d₅₀ dar (siehe dazu "Ultrazentrifugenmessungen", W. Scholtan et al., Kolloidz. und Z. Polymere 250 (1972), S. 783-796).

Pfropfausbeute ist das Gewichtsverhältnis der pfropfpolymerisierten, harzbildenden Monomere zu der Gesamtmenge der eingesetzten harzbildenden Monomere.

### Beispiele

### Pfropfpolymerisat a)

### Herstellung des Acrylatkautschuks-(Pfropfgrundlage)

In einem Reaktor werden vorgelegt:
17.232 Gew.-Teile Wasser und 588 Gew.-Teile eines Polybutadienkautschuklatex mit einem Polymerfeststoffgehalt von 42 Gew.-% und einem mittleren Teilchendurchmesser (d₅₀) von 140 nm. Nach Aufheizen auf 63°C gibt man eine Lösung aus 49,2 Gew.-Teilen Kaliumperoxodisulfat und 1.152 Gew.-Teilen Wasser hinzu. Danach werden folgende Mischungen gleichzeitig innerhalb von 5 Stunden bei 63°C in den Reaktor eingespeist.
- Lösung 1:: 36.000 Gew.-Teile n-Butylacrylat
81,6 Gew.-Teile Triallylcyanurat
- Lösung 2:: 40.800 Gew.-Teile Wasser
384 Gew.-Teile C₁₄-C₁₈-Alkylsulfonsäuren-Na-Salz.

Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser (d₅₀) beträgt 480 nm. Das Polymerisat besitzt einen Gel-Gehalt von 93 Gew.-%.

### Herstellung des Pfropfpolymerisats

In einem Reaktor werden 734 Gew.-Teile Wasser, 4.784 Gew.-Teile Latex der Acrylatkautschuk-Pfropfgrundlage vorgelegt. Es wird 30 Min. mit Stickstoff gespült und auf 70°C erhitzt. Unter Rühren wird die folgende Lösung 1 zugegeben:
- Lösung 1:: 190 Gew.-Teile Wasser
6 Gew.-Teile Kaliumperoxodisulfat
3 Gew.-Teile C₁₄-C₁₈-Alkylsulfonsäuren-Na-Salz.

Danach werden die Lösungen 2 und 3 gleichzeitig innerhalb 5 Stunden in den Reaktor bei 70°C eingespeist.
- Lösung 2:: 850 Gew.-Teile Styrol
330 Gew.-Teile Acrylnitril
- Lösung 3:: 1.500 Gew.-Teile Wasser
20 Gew.-Teile C₁₄-C₁₈-Alkylsulfonsäuren-Na-Salz.

Man läßt 4 Stunden bei 70°C auspolymerisieren. Es wird eine Emulsion mit einem Polymerfeststoffgehalt von 35 Gew.-% erhalten. Der Kautschukgehalt des Polymerisates beträgt 60 Gew.-%.

### Copolymerisat b)

### Herstellung des Acrylnitril/n-Butylacrylat-Copolymerisats

In einem Reaktor werden unter Rühren eine Lösung von 2,5 Gew.-Teilen Na-Salz von C₁₄-C₁₈-Alkylsulfonsäuren und 750 Gew.-Teilen Wasser vorgelegt. Nach Aufheizen auf 70°C gibt man 70 Gew.-Teile der Lösung A) (siehe unten) hinzu und initiiert die Polymerisation durch Zugabe einer Lösung von 3,5 Gew.-Teilen Kaliumperoxodisulfat in 50 Gew.-Teilen Wasser. Bei 70°C dosiert man den Rest der Lösung A) sowie die Lösung B) (siehe unten) gleichmäßig innerhalb von 6 Stunden in den Reaktor ein und polymerisiert innerhalb von 4 Stunden aus. Es wird ein Latex mit einem Polymerfeststoffgehalt von 38 Gew.-%, mit einem mittleren Teilchendurchmesser (d₅₀) von 180 nm und einem Gelgehalt (in Dimethylformamid bei 23°C) von 98 Gew.-%. erhalten.
- Lösung A:: 1 105 Gew.-Teile n-Butylacrylat 7 Gew.-Teile Triallylcyanurat
474 Gew.-Teile Acrylnitril
- Lösung B:: 30 Gew.-Teile Na-Salz von C₁₄-C₁₈-Alkylsulfonsäuren
1.790 Gew.-Teile Wasser.

### Polymerisat c)

### Herstellung des Styrol-Acrylnitril-Copolymerisats

In einem Reaktor werden eine Lösung von 6 Gew.-Teilen disproportionierte Abietinsäure, 4 Gew.-Teilen 1-normale Natronlauge in 3.080 Gew.-Teilen Wasser vorgelegt, mit Stickstoff gespült und auf 70°C geheizt. Unter Rühren setzt man 200 Gew.-Teile der Lösung A) zu und initiiert die Polymerisation durch Zugabe einer Lösung aus 8 Gew.-Teilen Kaliumperoxodisulfat in 200 Gew.-Teilen Wasser. Bei 70°C dosiert man den Rest der Lösung A) und Lösung B) gleichmäßig innerhalb 5 Stunden in den Reaktor ein.

Man läßt 4 Stunden bei 70°C auspolymerisieren. Es wird eine Emulsion mit einem Polymerfeststoffgehalt von 33 Gew.-% erhalten. Das isolierte Polymerisat besitzt einen Staudinger-Index [η] von 0,7 dl/g (in Dimethylformamid bei 23°C).
- Lösung A:: 1.944 Gew.-Teile Styrol
756 Gew.-Teile Acrylnitril
2,6 Gew.-Teile tert.-Dodecylmercaptan
- Lösung B:: 54 Gew.-Teile disproportionierte Abietinsäure
40 Gew.-Teile 1-normale Natronlauge
2.050 Gew.-Teile Wasser.

### Polyester d)

### Polyester d.1)

### Herstellung eines Polyestercarbonatkautschuks:

1.000 Gew.-Teile eines Polyesterdiols, erhalten aus Adipinsäure und einer Mischung von n-Hexan-1,6-diol und Neopentylglykol in einem Gewichtsverhältnis von 65 zu 35 mit der mittleren Molmasse M̅ₙ = 2.000 g·mol⁻¹ (Zahlenmittel) bestimmt über OH-Zahl), 107 Gew.-Teile Diphenylcarbonat und 0,12 Gew.-Teile Natriumphenolat, werden in einem Kessel 2 Stunden bei 130°C und dann 1 Stunde bei 160°C unter einem Vakuum von 0,5 Torr gerührt. Überschüssiges Phenol wird zunächst während des Rührens abdestilliert und die übrigbleibende hochviskose Rührmasse wird zur Erhöhung der Molmasse mit einer Zahnradpumpe in einen Wellenextruder der Firma Werner & Pfleiderer (ZSK 32) eingepumpt zur Entfernung des restlichen Phenols (Phenolgehalt <10 ppm, Verweilzeit: τ<5′, Temperaturen im Extruder: Tᵢ = 180°C). Man erhält ein farbloses, hochmolekulares Granulat mit [η] = 2,3 dl/g. (In Tetrahydrofuran).

### Polyester d.2)

### Herstellung eines Polyester-ether-carbonatkautschuks:

2.000 Gew.-Teile eines Polyesterdiols, erhalten aus Adipinsäure und einer Mischung aus n-Hexan-1,6-diol und Neopentylglykol in einem Gewichtsverhältnis von 65 zu 35 und einer mittleren Molmasse M̅ₙ = 2.000 g·mol⁻¹ (Zahlenmittel; bestimmt durch OH-Zahl), 24 Teile Diphenylcarbonat und 0,12 Teile Natriumphenolat, werden 2 Stunden bei 130°C und 1 Stunde bei 150°C unter einem Vakuum von 1,0 Torr gerührt. Überschüssiges Phenol wird abdestilliert; während der Destillation wird die Temperatur auf 180°C 4 Stunden lang gehalten und kontinuierlich 20 Gew.-Teile Polytetrahydrofuran-Diol (mittlerer Molmasse M̅ₙ = 2.000 g·mol⁻¹) mit terminalen Phenylcarbonatgruppen hinzugegeben. Die Reaktionstemperatur steigt bis 190°C. Man läßt noch etwa 5 Stunden rühren. Die übrigbleibende hochviskose Masse wird zur Erhöhung der Molmasse mit einer Zahnradpumpe in einen Schneckenextruder im Typ ZSK 32 eingepumpt zur Entfernung des restlichen Phenols (Phenolgehalt <10 ppm, τ<4′, Temperatur im Extruder: Tᵢ = 200°C). Man erhält ein farbloses, hochmolekulares Granulat mit [η] = 1,4 dl/g. (In Tetrahydrofuran).

### Herstellung und Eigenschaften der Polymerisatmischungen

Zur Herstellung der Polymerisatmischungen werden die Latices der Bestandteile a), b) und c) so vermischt, daß die Feststoffanteile die in Tabelle 1 aufgeführten Zusammensetzungen der Polymerisatmischungen ergeben. Die Latexmischungen werden mit 1 Gew.-% (bezogen auf Feststoff) eines phenolischen Stabilisators versetzt und mit wäßriger Magnesiumsulfatlösung koaguliert. Die primär erhaltenen Pulver werden abfiltriert, gewaschen und bei 60°C getrocknet. Die Pulver werden mit Bestandteil d) entsprechend Tabelle 1 und 0,4 Gew.-% Esterwachs auf einem Mischwalzwerk 10 Min. bei 190°C homogenisiert und bei 200°C zu Prüfkörpern verpreßt. Die Eigenschaften der Prüfkörper sind in Tabelle 2 aufgelistet.

### Prüfmethoden:

| | |
|---|---|
| Zugfestigkeit | DIN 53 455 |
| Dehnung | DIN 53 455 |
| Weiterreißfestigkeit | DIN 53 515 |
| Shore-Härte | DIN 53 505/Typ D |
| Kältefestigkeit (Fallhammermethode) | DIN 53 372 |

### Tiefziehversuch

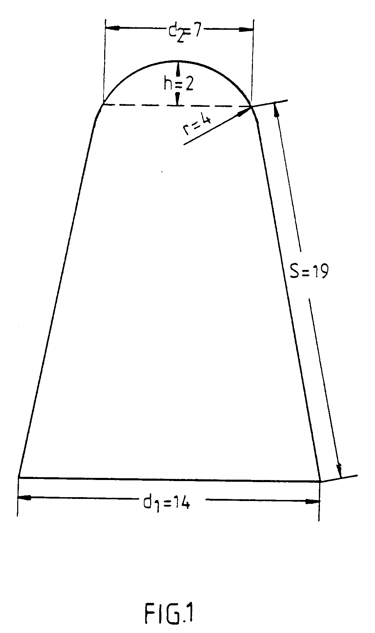

Eine auf der Walze hergestellte Folie (Länge 300 mm, Breite 300 mm, Dicke 1 mm) wird in eine Tiefziehform eingespannt und auf 160°C bzw. 175°C Oberflächentemperatur erhitzt (Bestimmung der Oberflächentemperatur mittels Schmelzsalz). Ein Kegelstumpf gemäß Figur 1 wird unter Anlegen eines Vakuums 21 cm tief in die Folie hineingedrückt.

### Beurteilung

+ Es wird bei 160°C und bei 175°C Oberflächentemperatur ein dem Kegelstumpf entsprechender Hohlkörper gleichmäßiger Wandstärke erhalten.

### Vergleich der Alterungsstabilität der erfindungsgemäßen Polymerisatmischungen 1 und 2 mit bekannten polyvinylchloridhaltigen Tiefziehformmassen

Folien aus den Materialien werden bei 130°C und 150°C 21 Tage gelagert. Während sich die polyvinylchloridhaltigen Folien dunkelbraun bis schwarz verfärben, verändert sich die Farbe der erfindungsgemäßen Folien praktisch nicht.

**Tabelle 1**

| Zusammensetzung der Polymermischungen | | | | | |
|---|---|---|---|---|---|
| Versuch Nr. | **Bestandteile** | | | | |
| | a | b | c | d₁ | d₂ |
| 1 | 36 | 36 | 18 | 10 | - |
| 2 | 36 | 36 | 18 | - | 10 |

**Tabelle 2**

| Eigenschaften der Mischungen aus Tabelle 1 | | | | | | |
|---|---|---|---|---|---|---|
| Versuch Nr. | Zugfestigkeit [MPa] | Dehnung [%] | Weiterreißfestigkeit [N/mm] | Shore-Härte [15˝] | Kältefestigkeit [°C] | Tiefziehverh. |
| 1 | 15,4 | 265 | 50 | 30 | -19 | + |
| 2 | 14,8 | 253 | 52 | 30 | -21 | + |

## Patentansprüche

1. Polymerisatmischungen aus
a) 10 bis 60 Gew.-Teilen eines Pfropfpolymerisates mit einem Kautschukgehalt von 30 bis 80 Gew.-% von
a.1) Gemischen aus 20 bis 40 Gew.-% Acrylnitril und 80 bis 60 Gew.-% Styrolen und/oder Alkylmethacrylaten oder
a.2) Methylmethacrylat, gegebenenfalls gemischt mit bis zu 30 Gew.-% Styrolen und/oder bis zu 30 Gew.-% Alkylacrylaten und/oder bis zu 19 Gew.-% Acrylnitril auf
a.3) einen teilchenförmigen hochvernetzten Alkylacrylatkautschuk, der bis zu 30 Gew.-% Diene einpolymerisiert enthalten kann, mit einem mittleren Teilchendurchmesser (d₅₀) von 80 bis 1.000 nm,
b) 10 bis 50 Gew.-Teilen eines teilvernetzten kautschukartigen Copolymerisats aus 5 bis 40 Gew.-% Acrylnitril, Styrol, Alkylmethacrylat oder deren Mischungen und 95 bis 60 Gew.-% Alkylacrylat mit einem Gelgehalt von 20 bis 99 Gew.-%, einem Quellungsindex größer 10, gemessen in Dimethylformamid bei 23°C, und einem mittleren Teilchendurchmesser (d₅₀) von 100 bis 600 nm,
c) 5 bis 40 Gew.-Teilen eines unvernetzten Polymerisates von Styrolen, Acrylnitril, Methacrylnitril, Estern der (Meth)acrylsäure, Vinyl-C₁-C₄-Carbonsäuren oder Mischungen dieser Monomere mit Staudinger-Indices [η] (in Dimethylformamid bei 23°C gemessen) von 0,3 bis 1,5 dl/g und
d) 1 bis 40 Gew.-Teilen eines Carbonatgruppen enthaltenden Polyesters mit wiederkehrenden Struktureinheiten der Formel 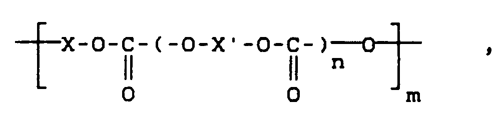 in der
X der Rest eines Umsetzungsproduktes eines mehrwertigen Alkohols mit einer mehrwertigen aliphatischen Carbonsäure mit einem Molekulargewicht von 800 bis 5,000 ist,
X′ = X oder den Rest eines aliphatischen Polyethers vom Molekulargewicht 800 bis 5-000 darstellt,
n = 0 oder 1 bis 20 ist und
m eine Zahl größer 20 bedeutet.

2. Verwendung der Polymerisatmischungen nach Anspruch 1 zur Herstellung von tiefziehbaren, flexiblen Folien.

## Claims

1. Polymer mixtures of
a) from 10 to 60 parts by weight of a graft polymer having a rubber content of from 30 to 80% by weight of
a.1) mixtures of from 20 to 40% by weight of acrylonitrile and from 80 to 60% by weight of styrenes and/or alkylmethacrylates or
a.2) methylmethacrylate optionally mixed with up to 30% by weight of styrenes and/or up to 30% by weight of alkylacrylates and/or up to 19% by weight of acrylonitrile on
a.3) a particulate, highly cross-linked alkylacrylate rubber which may contain up to 30% by weight of dienes incorporated by polymerisation and which has an average particle diameter (d₅₀) of from 80 to 1000 nm,
b) from 10 to 50 parts by weight of a partially cross-linked rubber-like copolymer of 5 to 40% by weight of acrylonitrile, styrene, alkylmethacrylate or mixtures thereof and from 95 to 60% by weight of alkylacrylate having a gel content of from 20 to 99% by weight and a swelling index greater than 10, determined in dimethylformamide at 23°C, and an average particle diameter (d₅₀) of from 100 to 600 nm,
c) from 5 to 40 parts by weight of an uncross-linked polymer of styrenes, acrylonitrile, methacrylonitrile, esters of (meth)acrylic acid, vinyl-C₁-C₄-carboxylic acids or mixtures of these monomers having Staudinger-Indices [η ] (determined in dimethylformamide at 23°C) of from 0.3 to 1.5 dl/g and
d) from 1 to 40 parts by weight of a polyester containing carbonate groups and having recurrent structural units of the formula 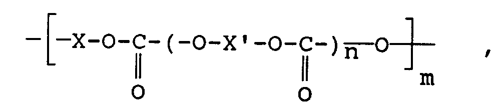 in which
X denotes the radical of a reaction product of a polyhydric alcohol with a polybasic aliphatic carboxylic acid having a molecular weight of from 800 to 5000,
X' = X or the radical of an aliphatic polyether having a molecular weight of from 800 to 5000,
n = 0 or 1 to 20 and
m denotes an integer greater than 20.

2. Use of the polymer mixtures according to Claim 1 for the production of deep drawable, flexible films.

## Revendications

1. Mélanges de polymères consistant en
a) 10 à 60 parties en poids, d'un polymère greffé, à une teneur en caoutchouc de 30 à 80% en poids, de
a.1) des mélanges de 20 à 40% en poids d'acrylonitrile et de 80 à 60% en poids de styrènes et/ou de méthacrylates d'alkyle, ou bien
a.2) du méthacrylate de méthyle, éventuellement en mélange avec une proportion allant jusqu'à 30% en poids de styrènes et/ou une proportion allant lusqu'à 30% en poids d'acrylates d'alkyle et/ou une proportion allant jusqu'à 19% en poids d'acrylonitrile, sur
a.3) un caoutchouc d'acrylate d'alkyle fortement réticulé, en particules, qui peut contenir à l'état polymérisé jusqu'à 30% en poids de diènes, à un diamètre de particule moyen. (d₅₀) de 80 à 1000 nm,
b) 10 à 50 parties en poids d'un copolymère du type caoutchouc, partiellement réticulé, de 5 à 40% en poids d'acrylonitrile, de styrène, de méthacrylate d'alkyle ou leurs mélanges et 95 à 60% en poids d'acrylate d'alkyle, à une teneur en gel de 20 à 99% en poids, un indice de gonflement supérieur à 10, la mesure étant faite dans le diméthylformamide à 23°C, et un diamètre de particule moyen (d₅₀) de 100 à 600 nm,
c) 5 à 40 parties en poids d'un polymère non réticulé de styrènes, de l'acrylonitrile, du méthacrylonitrile, d'esters (méth)acryliques, d'esters vinyliques d'acides carboxyliques en C₁-C₄ ou de mélanges de ces monomères, avec un indice de Staudinger [η] (mesure dans le diméthylformamide à 23°C) de 0,3 à 1,5 dl/g et
d) 1 à 40 parties en poids d'un polyester contenant des groupes carbonate, à motifs de structure répétés de formule : 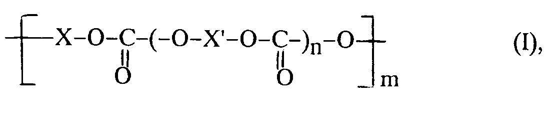 dans laquelle
X représente le radical d'un produit de réaction d'un alcool polyvalent et d'un acide carboxylique aliphatique polyvalent, de poids moléculaire 800 à 5000,
X' = X ou le radical d'un polyéther aliphatique de poids moléculaire 800 à 5000,
n est égal à 0 ou représente un nombre de 1 à 20 et
m est un nombre supérieur à 20.

2. Utilisation des mélanges de polymères selon la revendication 1, pour la fabrication de feuilles souples emboutissables.
